# EUROPEAN PATENT SPECIFICATION

(11) **EP 3 549 491 B1**
(45) Date of publication and mention of the grant of the patent: **13.05.2020**
(21) Application number: 18180289.3
(22) Date of filing: 28.06.2018
(51) Int. Cl.: A47J 27/08

(54) **VACUUM ENERGY-SAVING HEAT-PRESERVATION PRESSURE COOKER**
ENERGIESPARENDER HITZEKONSERVIERENDER VAKUUMDRUCKKOCHTOPF
AUTOCUISEUR DE CONSERVATION DE CHALEUR À ÉCONOMIE D'ÉNERGIE SOUS VIDE

(30) Priority: 02.04.2018 CN 201810283566
(43) Date of publication of application: 09.10.2019
(73) Proprietor: Ying, Zhan, 321306 Yongkang, Zhejiang Province (CN)
(72) Inventor: Ying, Zhan, 321306 Yongkang, Zhejiang Province (CN)
(74) Representative: Loo, Chi Ching

(56) References cited:
- CN-U- 203 028 945
- GB-A- 2 080 143
- US-A1- 2009 008 380

## Description

### BACKGROUND OF THE INVENTION

### Field of the Invention

This invention relates to a heating container, and more particularly, to a vacuum energy-saving heat-preservation pressure cooker.

### Description of the Related Art

A pressure cooker accelerates cooking efficiency as a boiling point of water raises at a relatively high pressure, such that the boiling point of the water can be increased to more than 100 °C, thus features such as energy-saving, time-saving and high efficiency are achieved. However, the pressure cooker on the market today has reached the highest level of performance in terms of energy-saving, time-saving, and high efficiency, and whether or not we can find a right way to further improve the performance of the pressure cooker is the technical problem that we need to consider next. But at present, technological breakthroughs are quite difficult.

A working pressure of the pressure cooker on the existing shopping mall is generally 80 kPa, and some people think of increasing a working pressure range of the pressure cooker to further improve the performance of the pressure cooker. For example, the working pressure of the pressure cooker is adjusted to 100 kPa or 120 kPa. Although this can shorten cooking time of the food so as to save time and energy, a safety risk of using the pressure cooker increases with the increase of the work pressure. As the working pressure in the pressure cooker is not unlimited, the working pressure of the pressure cooker can be too large to cause the safety risk of explosion.

In addition, the cooker bottom of the existing pressure cooker can only use open fire sources such as gas, and a heating way is single based on limitation of a material. And the cooker bottom of the pressure cooker is prone to be heated unevenly which leads to be a burned bottom. After the cooker bottom is burned, it is difficult to clean, and it affects thermal conductivity and heat transfer uniformity when the pressure cooker is used again. The burned position is often most likely to lead to be burned again, so as to form a vicious circle, which affects service life of the cooker bottom of the pressure cooker and user experience.

### BRIEF SUMMARY OF THE INVENTION

An objective of this invention is to provide a vacuum energy-saving heat-preservation pressure cooker, which solves problems that the heat-preservation and energy-saving performance of the existing pressure cooker cannot be further improved and the safety is not high.

To solve above-mentioned problems, this invention provides a vacuum energy-saving heat-preservation pressure cooker according to claim 1.

According to one embodiment of this invention, both the cooker body inner layer and the cooker body outer layer may adopt a stainless steel material. A thickness range of the cooker body inner layer may be 0.8 -1.5 mm, and a thickness range of the cooker body outer layer may be 0.5-1.0 mm.

According to one embodiment of this invention, the bottom wall of the cooker body inner layer may be exposed at the cooker body outer layer, and the cooker body outer layer and the cooker body inner layer may be laser welded together.

According to one embodiment of this invention, a thickness range of the cooker cover inner layer may be 0.8-1.5 mm, and a thickness range of the cooker cover outer layer may be 0.5-1.0 mm. According to one embodiment of this invention, both the cooker cover inner layer and the cooker cover outer layer may be formed by stainless steel stretching, and the cooker cover inner layer and the cooker cover outer layer may be sealed and combined together through laser welding.

According to one embodiment of this invention, the cooker cover may include a mask and a handle, the mask may cover the cooker cover outer layer, and the handle may be embedded at the mask. The mask may be provided with a second sleeving hole and two waist-shaped holes, and the two waist-shaped holes may be located at both sides of the second sleeving hole, respectively. The handle may be provided with a third sleeving hole and two fixing holes, and the two fixing holes may be located at both sides of the third sleeving hole, respectively. The fixing screw of the cooker cover outer layer may pass through the second sleeving hole of the mask and the third sleeving hole of the handle in turn, and the two fixing columns of the shifting fork wheel may correspondingly pass through the two waist-shaped holes of the mask and the two fixing holes of the handle in turn, respectively. When the handle is rotated, the handle may drive the shifting fork wheel to be rotated, and the shifting fork wheel may drive the two clamps to swing through the connecting plates.

According to one embodiment of this invention, the cooker cover may include a pressure limiting valve, a display valve and a safety valve, and the pressure limiting valve, the display valve and the safety valve may be all disposed at the cooker cover. An exhaust pipe may be disposed in the pressure limiting valve for exhausting gas, one end of the connecting plate may have a limiting hole, and the safety valve may be capable of being lifted up and down through the limiting hole of the connecting plate. When the limiting hole of the connecting plate and the safety valve are in a misaligned state, the connecting plate may prevent the safety valve from rising, and the safety valve may be open; and when the limiting hole of the connecting plate coincides with a position of the safety valve, the safety valve may pass through the limiting hole and rises, and the safety valve may be closed.

Compared with the prior art, this technical solution has the following advantages:
In the present invention, the cooker body is set to be a two-layer structure including a cooker body inner layer and a cooker body outer layer, thereby defining a first vacuum cavity between the cooker body inner layer and the cooker body outer layer. Such design can maximally prevent heat transfer through the cooker body and avoid dissipation of the heat in the vacuum energy-saving heat-preservation pressure cooker. Compared with the general pressure cooker, the vacuum energy-saving heat-preservation pressure cooker in this solution has better heat-preservation performance. Secondly, by pressure-welding the bottom wall of the cooker body inner layer, the cooker bottom which includes the aluminum layer and the stainless steel layer together, a three-layer composite 'cooker bottom' is formed, which is strong, durable, uniformly heated, rapid heat conductive, energy-saving and time-saving. In the cooker bottom, the aluminum layer has good adhesion, and the stainless steel has good magnetic conductivity. Therefore, the vacuum energy-saving heat-preservation pressure cooker in this solution can use an induction cooker as a heating source, or gas, an infrared furnace, etc. as heating sources, and heating ways are diversified. All in all, by adopting the composite cooker bottom, the heating way and thermal conductivity of the vacuum energy-saving heat-preservation pressure cooker are optimized. In addition, by adopting the cooker body with a vacuum structure, an excellent heat-preservation performance is obtained, and the heat loss is reduced, such that the heating efficiency of the vacuum energy-saving heat-preservation pressure cooker of the present solution is significantly improved compared with the conventional technology, and the time for cooking food is further saved by high-efficiency and energy-saving.

In the present invention, the cooker cover is set to be a two-layer structure, that is, the cooker cover inner layer and the cooker cover outer layer, such that a second vacuum cavity is formed between the cooker cover inner layer and the cooker cover outer layer. Such design can maximally prevent the heat transfer through the cooker cover, and avoid the heat loss inside the vacuum energy-saving heat-preservation pressure cooker, which further improve the heat-preservation performance of the vacuum energy-saving heat-preservation pressure cooker. It can be understood that both the cooker body and the cooker cover of the vacuum energy-saving heat-preservation pressure cooker in the present solution are set to be two-layer vacuum structures, and the entire vacuum energy-saving heat-preservation pressure cooker is almost a vacuum two-layer structure except for the cooker bottom, which can minimize the heat loss in the vacuum energy-saving heat-preservation pressure cooker, improve the utilization of the heat source, and save energy and heat. And as the heat loss of the vacuum energy-saving heat-preservation pressure cooker in the heating process is small, and the heating efficiency is high, the cooking time is saved.

In this invention, by designing structures of the mask and the handle and covering a set of opening and closing mechanism inside the product, i.e. the safety valve, pressure limiting valve, display valve, clamps, and connecting plates form a safe opening and closing mechanism, the purpose of opening and tightly closing the cooker cover and the cooker body through the clamps is achieved. In addition, interaction between the connecting plates and the safety valve can ensure that the pressure in the vacuum energy-saving heat-preservation pressure cooker does not rise and the cooker cover cannot be opened under high pressure when the cooker cover is not in place (i.e., the mask and the handle are misaligned), such that the product is simple in structure, easy to operate, low cost, while the product has performances such as energy-saving, time-saving, efficient, anti-scalding and so on, which is easy for promotion in large scale.

### BRIEF DESCRIPTION OF THE DRAWINGS

FIG. 1 is a schematic diagram of a three-dimensional structure of a vacuum energy-saving heat-preservation pressure cooker according to an embodiment of the present invention;
FIG. 2 is a structural exploded view of the vacuum energy-saving heat-preservation pressure cooker according to an embodiment of the present invention;
FIG. 3 is a section view of a cooker body inner layer of the vacuum energy-saving heat-preservation pressure cooker according to an embodiment of the present invention;
FIG. 4A is a section view of a cook body outer layer of the vacuum energy-saving heat-preservation pressure cooker according to an embodiment of the present invention;
FIG. 4B is a schematic diagram of a three-dimensional structure of the cook body outer layer of the vacuum energy-saving heat-preservation pressure cooker according to an embodiment of the present invention;
FIG. 5 is a section view of a cook body of the vacuum energy-saving heat-preservation pressure cooker according to an embodiment of the present invention, showing a way in which the cooker body inner layer and the cooker body outer layer are connected;
FIG. 6A is a schematic diagram of a three-dimensional structure of a cook cover inner layer of the vacuum energy-saving heat-preservation pressure cooker according to an embodiment of the present invention;
FIG. 6B is a section view of a cook cover outer layer of the vacuum energy-saving heat-preservation pressure cooker according to an embodiment of the present invention;
FIG. 7A is a schematic diagram of a three-dimensional structure of the cook cover outer layer of the vacuum energy-saving heat-preservation pressure cooker according to an embodiment of the present invention;
FIG. 7B is a section view of the cook cover outer layer of the vacuum energy-saving heat-preservation pressure cooker according to an embodiment of the present invention;
FIG. 8 is a section view of a cook cover of the vacuum energy-saving heat-preservation pressure cooker according to an embodiment of the present invention, showing a way in which the cooker cover inner layer and the cooker cover outer layer are connected;
FIG. 9 is a schematic diagram of a three-dimensional structure of a shifting fork wheel of the vacuum energy-saving heat-preservation pressure cooker according to an embodiment of the present invention;
FIG. 10 is a schematic diagram of a three-dimensional structure of a connecting plate of the vacuum energy-saving heat-preservation pressure cooker according to an embodiment of the present invention;
FIG. 11 is a schematic diagram of a three-dimensional structure of a clamp of the vacuum energy-saving heat-preservation pressure cooker according to an embodiment of the present invention;
FIG. 12 is a schematic diagram of a three-dimensional structure of a mask of the vacuum energy-saving heat-preservation pressure cooker according to an embodiment of the present invention;
FIG. 13 is a schematic diagram of a three-dimensional structure of a handle of the vacuum energy-saving heat-preservation pressure cooker according to an embodiment of the present invention;
FIG. 14 is a schematic diagram of a three-dimensional structure of a pressure limiting valve of the vacuum energy-saving heat-preservation pressure cooker according to an embodiment of the present invention;
FIG. 15 is a schematic diagram of a three-dimensional structure of a display valve of the vacuum energy-saving heat-preservation pressure cooker according to an embodiment of the present invention;
FIG. 16 is a schematic diagram of a three-dimensional structure of a safety valve of the vacuum energy-saving heat-preservation pressure cooker according to an embodiment of the present invention;
FIG. 17 is a schematic diagram of a three-dimensional structure of the vacuum energy-saving heat-preservation pressure cooker with the mask and the handle removed according an embodiment of the present invention, illustrating a principle that the cooker cover is closed by a linkage between the shifting fork wheel, the connecting plate, and the clamp; and
FIG. 18 is a schematic diagram of a three-dimensional structure of the vacuum energy-saving heat-preservation pressure cooker with the mask and the handle removed according an embodiment of the present invention, illustrating a principle that the cooker cover is open by a linkage between the shifting fork wheel, the connecting plate, and the clamp.

### DETAILED DESCRIPTION OF THE INVENTION

The following description is only used to expose the present invention so that those skilled in the art can implement the present invention. The following described embodiments are only examples, and those skilled in the art can think of other obvious modifications. The basic principle of the present invention defined in the following description can be applied to other embodiments, variants, improvements, equivalents and other solutions without departing from the scope of the present invention as defined in the claims.

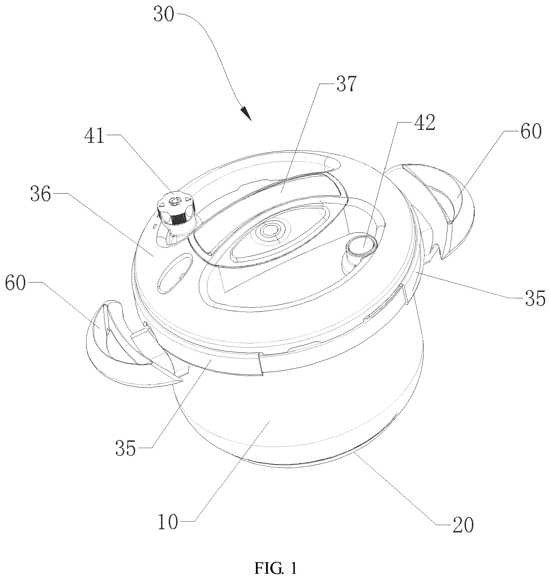

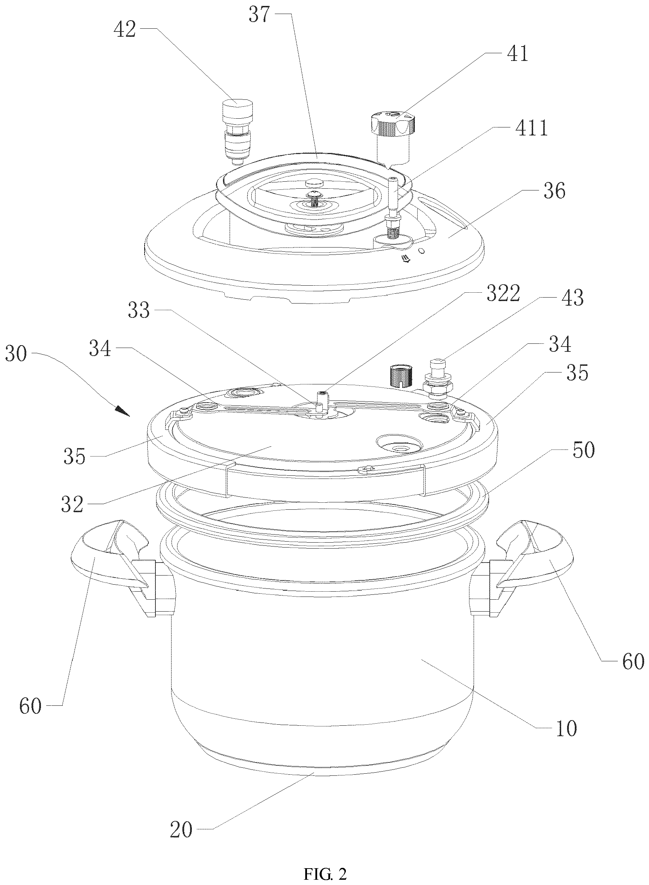

As shown in FIG. 1 and FIG. 2, this invention provides a vacuum energy-saving heat-preservation pressure cooker. The vacuum energy-saving heat-preservation pressure cooker adopts a vacuum two-layer structure, which improves heat-preservation performance, minimizes heat loss, and achieves advantages of high-efficiency, energy-saving and time-saving. The vacuum energy-saving heat-preservation pressure cooker includes a cooker body 10, a cooker bottom 20 and a cooker cover 30.

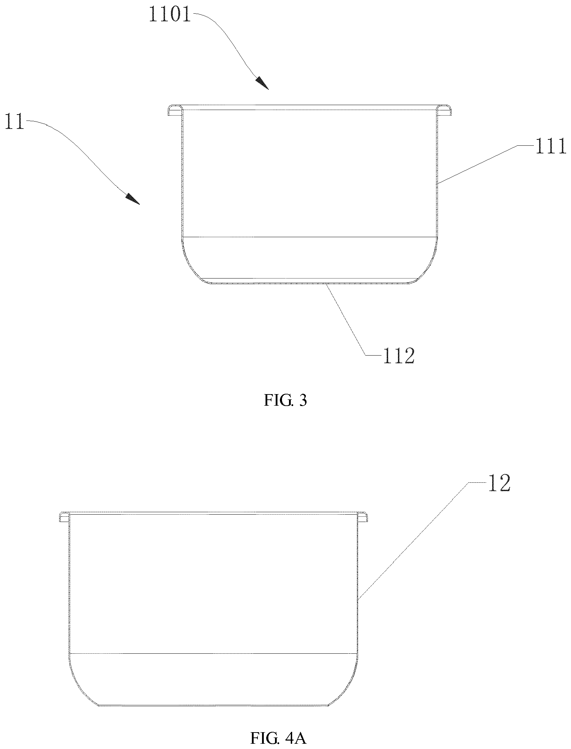

The cooker body 10 includes a cooker body inner layer 11 and a cooker body outer layer 12. As shown in FIG. 3, the cooker body inner layer 11 has a side wall 111 and a bottom wall 112, the side wall 111 of the cooker body inner layer 11 and the bottom wall 112 of the cooker body inner layer 11 form a containing cavity 1101, and the containing cavity 1101 can be used to place food and water for cooking. The cooker body inner layer 11 is cylindrical and is a conventional shape of cooker body. The cooker body inner layer 11 can be used for place food and water for cooking. The cooker body inner layer 11 is made of stainless steel, and the cooker body inner layer 11 is formed by stainless steel stretching. Optionally, the thickness range of the cooker body inner layer 11 is 0.8-1.5 mm, which is more conducive to realization of a stretch forming process. In addition, the cooker body inner layer within this thickness range can minimize the manufacturing cost while ensuring functionality. In practical applications, different thicknesses of the cooker body inner layer 11 can be selected according to the specification and volume of the vacuum energy-saving heat-preservation pressure cooker.

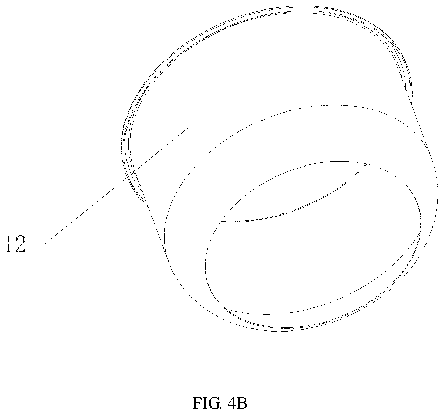

As shown in FIG. 4A and FIG. 4B, the cooker body outer layer 12 is annular, and the cooker body outer layer 12 surrounds the perimeter of the cooker body inner layer 11. In other words, the cooker body inner layer 11 is embedded at the inner side of the cooker body outer layer 12. The cooker body outer layer 12 is in sealed combination with the side wall 111 of the cooker body inner layer 11. In comparison, it can be understood that the diameter of the cooker body outer layer 12 is slightly larger than that of the cooker body inner layer 11, and the shape of the cooker body outer layer 12 corresponds to the shape of the remained side wall 111 only after the cooker body inner layer 11 is removed from the bottom wall 112. The cooker body outer layer 12 is made of stainless steel, and the cooker body outer layer 12 is formed by stainless steel stretching, or a seam is laser welded after a sheet is rolled into a cylindrical shape, then a top mouth and a bottom mouth of the cooker body outer layer 12 are processed and formed by a spinning process. In order to facilitate the forming of the sheet roll and the spinning process, the thickness range of the cooker body outer layer 12 is set to be 0.5 -1.0 mm to achieve the above-mentioned molding process. In addition, the thickness of the inner and outer layers of the cooker body is close to the bonding of the welding seam. In practical applications, different thicknesses of the cooker body outer layer 12 can also be selected according to the specification and volume of the vacuum energy-saving heat-preservation pressure cooker.

Preferably, the thickness of the cooker body inner layer 11 is larger than the thickness of the cooker body outer layer 12. The advantage of this design is that the thickness of the cooker body inner layer 11 is larger to ensure the strength, performance and safety of the vacuum energy-saving heat-preservation pressure cooker. The thickness of cooker body outer layer 12 is smaller, which can reduce the overall weight of the vacuum energy-saving heat-preservation pressure cooker, and reduce the material cost and the manufacturing cost of the vacuum energy-saving heat-preservation pressure cooker.

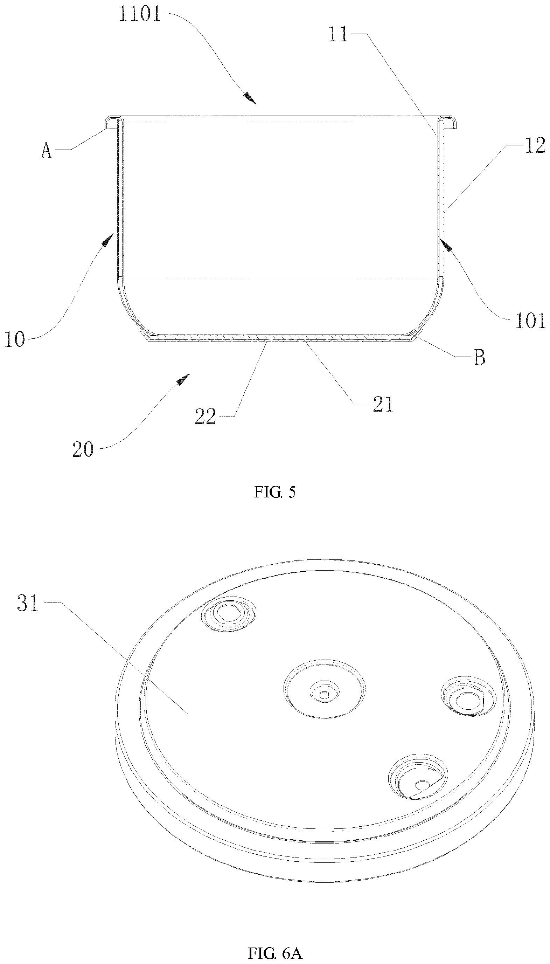

As shown in FIG. 5, the cooker body inner layer 11 and the cooker body outer layer 12 are embedded and assembled together to form the cooker body 10. The bottom wall 112 of the cooker body inner layer 11 is exposed at the cooker body outer layer 12, and the cooker body outer layer 12 and the cooker body inner layer 11 are laser welded. In this way, the cooker body outer layer 12 surrounds and are fixed at the side wall 111 of the cooker body inner layer 11. A first vacuum cavity 101 is formed between the cooker body inner layer 11 and the cooker body outer layer 12, and the first vacuum cavity 101 is evacuated to be a vacuum state. It can be understood that by setting the cooker body 10 as a two-layer vacuum structure, heat can be maximally prevented from being dissipated outward through the cooker body 10, thereby playing a role of heat-preservation and improving the heat-preservation performance of the vacuum energy-saving heat-preservation pressure cooker.

In actual production, after the cooker body inner layer 11 is embedded at the inner side of the cooker body outer layer 12, the top mouth of the cooker body inner layer 11 and the top mouth of the cooker body outer layer 12 are welded together by laser welding, as shown in position A in FIG. 5. At this time, the bottom wall of the cooker body inner layer 11 is exposed at the cooker body outer layer 12. That is, the size of the cooker body inner layer 11 in the height direction is larger than that of the cooker body outer layer 12, such that the bottom mouth of the cooker body outer layer 12 contacts the bottom of the cooker body inner layer 11. Then the laser welding is used to weld the seam between the bottom mouth of the cooker body outer layer 12 and the bottom of the cooker body inner layer 11, as shown in the position B in FIG. 5, to ensure no welding leakage. A vacuum opening is reserved at a certain position of the welding seam at the bottom of the cooker body 10, and the gas in the first vacuum cavity 101 is evacuated such that the first vacuum cavity 101 reaches a high vacuum state, and there is no trace left at the welding position after evacuating. Specifically, during welding and evacuating, a special process of tailless vacuum technology is used to weld the tail, that is, the cooker body 10 is controlled by a computer to complete the process of evacuating, welding sealing and cooling under the vacuum environment. The tailless vacuum technology adopts the "melting sealing technology". The whole cooker body 10 is put into a vacuum brazing furnace for evacuating, and solder can be melted at a high temperature and close the evacuating hole, thereby ensuring no gas leakage for a long time, which greatly improve the heat-preservation effect. And the welding position will not generate a sharp evacuating tail, which avoids damage to the product when the evacuating tail is damaged.

As shown in FIG. 5, the cooker bottom 20 is bonded to the bottom of the cooker body 10. The cooker bottom 20 includes an aluminum layer 21 and a stainless iron layer 22, and the bottom wall 112 of the cooker body inner layer 11, the aluminum layer 21, and the stainless iron layer 22 are pressure-welded and closely contacted together. In this way, the bottom wall 112 of the cooker body inner layer 11, the aluminum layer 21 and the stainless iron layer 22 form a composite three-layer 'cooker bottom'. In the actual production, a double bottoming process is adopted. Firstly, the cooker body 10, the aluminum layer 21, and the stainless iron layer 22 are welded together by spot welding, then the whole of the welded cooker body 10 and the cooker bottom 20 are placed on an induction heating furnace, and the cooker bottom 20 is heated to 480 to 520 degrees (aluminum is in an intermediate state between liquid and solid in this temperature range). Finally, the heated cooker body 10 and cooker bottom 20 are quickly put into the mold of the friction press for quickly hitting and pressuring. After cooling, the aluminum layer 21 will bind the bottom wall 112 of the cooker body inner layer 11 and the stainless steel layer 22 together to create a special 'cooker bottom'. It can be understood that the aluminum layer has good adhesion and thermal conductivity, such that the vacuum energy-saving heat-preservation pressure cooker is heated evenly without burning the bottom. The stainless steel has good magnetic conductivity. Therefore, the vacuum energy-saving heat-preservation pressure cooker in this invention can use gas, an infrared furnace, etc. as heating sources, or an induction cooker as the heating source, and heating ways are diversified.

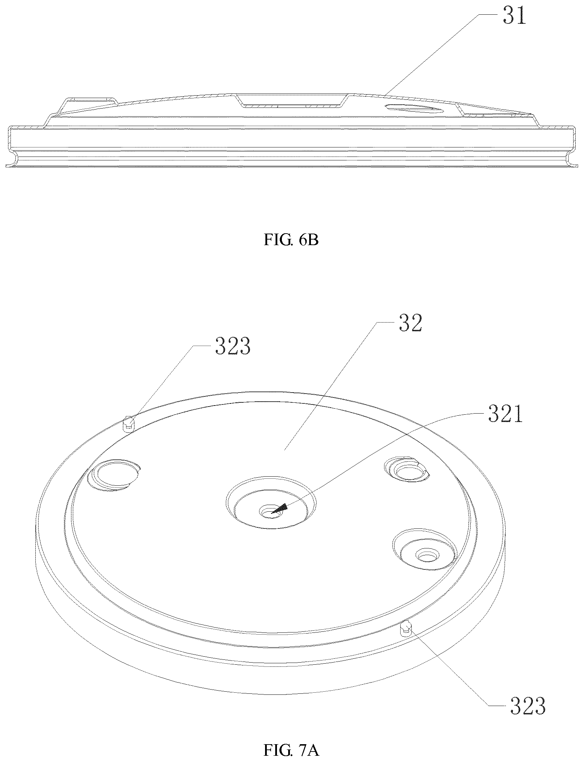

The cooker cover 30 covers the cooker body 10. The cooker body 10, cooker bottom 20 and cooker cover 30 are assembled to be the vacuum energy-saving heat-preservation pressure cooker. The cooker cover 30 includes a cooker cover inner layer 31 and a cooker cover outer layer 32. As shown in FIG. 6A and FIG. 6B, the cooker cover inner layer 31 is made of stainless steel, and the cooker cover inner layer 31 is formed by stainless steel stretching. Optionally, the thickness range of the cooker cover inner layer 31 is 0.8-1.5 mm, which is more conducive to realization of the stretch forming process. In addition, the cooker cover inner layer within this thickness range can minimize the manufacturing cost while ensuring functionality. In practical applications, different thicknesses of the cooker cover inner layer 31 can be selected according to the specification and volume of the vacuum energy-saving heat-preservation pressure cooker.

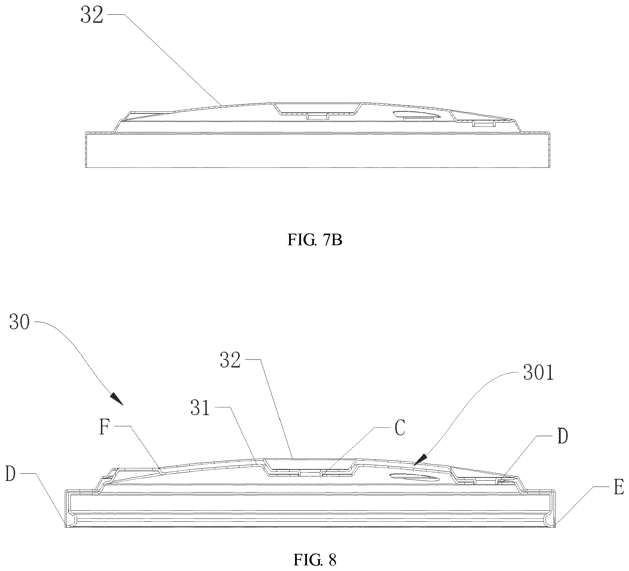

As shown in FIG. 7A and FIG. 7B, the centre of the cooker cover outer layer 32 has a centre hole 321, and edges of opposite sides of the cooker cover outer layer 32 has a pin roll 323, respectively. As shown in FIG. 2, the cook cover outer layer 32 is further provided with a fixing screw 322, and the fixing screw 322 is fixed at the center of the cook cover outer layer 32 through the center hole 321. The cooker cover outer layer 32 is made of stainless steel, and the cooker cover outer layer 32 is formed by stainless steel stretching. Optionally, the thickness range of the cooker cover outer layer 32 is 0.5-1.0 mm, which is more conducive to realization of the stretch forming process. In addition, this thickness range can minimize the manufacturing cost while ensuring functionality, and the thickness of the inner and outer layers of the cooker cover is conducive to the joint of welding the seam. In practical applications, different thicknesses of the cooker cover outer layer 32 can be selected according to the specification and volume of the vacuum energy-saving heat-preservation pressure cooker.

Preferably, the thickness of the cooker cover inner layer 31 is larger than the thickness of the cooker cover outer layer 32. The advantage of this design is that the thickness of the cooker cover inner layer 31 is larger to ensure the strength, performance and safety of the vacuum energy-saving heat-preservation pressure cooker. The thickness of cooker cover outer layer 12 is smaller, which can reduce the overall weight of the vacuum energy-saving heat-preservation pressure cooker, and reduce the material cost and the manufacturing cost of the vacuum energy-saving heat-preservation pressure cooker.

As shown in FIG. 8, the cooker cover inner layer 31 is embedded at the inner side of the cooker cover outer layer 32, and the cooker cover inner layer 31 and the cooker cover outer layer 32 are in sealed combination. Specifically, the cook cover inner layer 31 and the cook cover outer layer 32 are sealed and combined together by laser welding. A second vacuum cavity 301 is formed between the cooker cover inner layer 31 and the cooker cover outer layer 32, and the second vacuum cavity 301 is evacuated to be a vacuum state. It can be understood that by setting the cooker cover 30 as a two-layer vacuum structure, heat can be maximally prevented from being dissipated outward through the cooker cover 30, thereby playing a role of heat-preservation and improving the heat-preservation performance of the vacuum energy-saving heat-preservation pressure cooker.

In the actual production, after the cooker cover inner layer 31 is embedded at the inner side of the cooker cover outer layer 32, the laser welding is used to weld the connection and the mouths of the cooker cover outer layer 32 and the cooker cover inner layer 31 to ensure no welding leakage. A vacuum opening is reserved at the welding seam at the center of the cooker cover 30, and the gas in the second vacuum cavity 301 is evacuated such that the second vacuum cavity 301 reaches a high vacuum state, and there is no trace left at the welding position after evacuating.

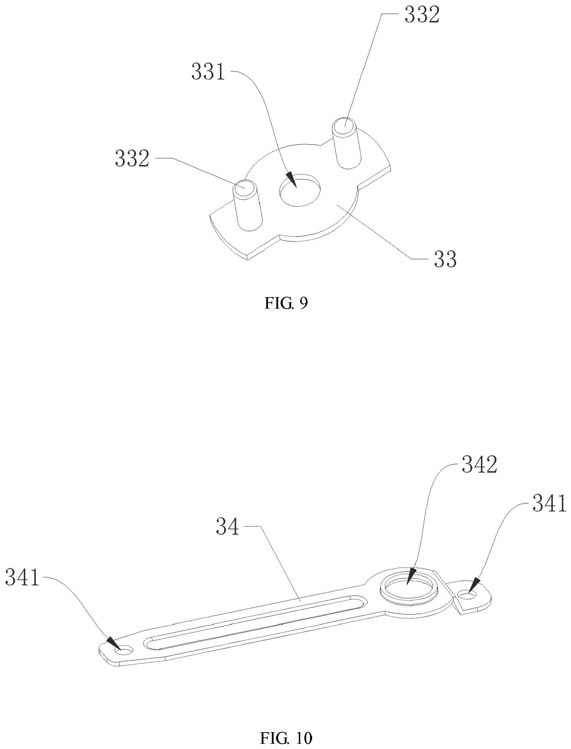

Further, as shown in FIG. 2, FIG. 9, FIG. 10 and FIG. 11, the cooker cover 30 further includes a shifting fork wheel 33, two connecting plates 34 and two clamps 35. The shifting fork wheel 33 has a first sleeving hole 331 and two fixing columns 332. The first sleeving hole 331 is located at the center of the shifting fork wheel 33, and the two fixing columns 332 are located at two sides of the first sleeving hole 331, respectively. The shifting fork wheel 33 is sleeved at the fixing screw 321 of the cooker cover outer layer 32 through the first sleeving hole 331. The shifting fork wheel 33 is operably rotated with the fixing screw 321 as an axle.

The connecting plates 34 are in the shape of long strips, two ends of each connecting plate 34 have a first connecting hole 341, respectively, and one end of each connecting plate 34 further has a limiting hole 342. One end of each of the two connecting plates 34 are sleeved at one of the two fixing columns 332, i.e. one end of one connecting plate 34 is sleeved at one fixing column 332, while one end of the other connecting plate 34 is sleeved at the other fixing column 332; specifically, the connecting plates 34 are sleeved at the fixing columns 332 through the first connecting holes 341.

The clamps 35 are arc shaped. Each of the clamps 35 has an arc shaped groove 351 at one side, the middle of each clamp 35 has a second connecting hole 352, and one end of each clamp 35 has a third connecting hole 353. The two clamps 35 are connected with the other ends of the connecting plates 34, respectively, and the respective ends of the two clamps 35 are fixed at edges of opposite sides of the cooker cover outer layer 32, respectively. That is, one end of one clamp 35 is fixed at the edge of one side of the cooker cover outer layer 32, while one end of the other clamp 35 is fixed at the edge of the opposite side of the cooker cover outer layer 32. The clamps 35 clamp the edge of the cooker cover 30 and the edge of the cooker body 10 through the grooves 351. Specifically, the second connecting hole 352 in the middle of the clamp 35 is connected with the first connecting hole 341 of the connecting plate 34 through a pin roll, and one end of the clamp 35 is sleeved at the pin roll 323 of the cooker cover outer layer 32 through the third connecting hole 353. It can be understood that two clamps 35 clamp both sides of the vacuum energy-saving heat-preservation pressure cooker, respectively, such that the cook cover 30 and the cooker body 10 are closed. One end of each connecting plate 34 is connected with each fixing column 332 of the shifting fork wheel 33, and the other end of each connecting plate 34 is connected with the second connecting hole 352 in the middle of each clamp 35. In other words, each connecting plate 34 is connected between the shifting fork wheel 33 and each clamp 35, such that the two connecting plates 34 are always located at both sides of the shifting fork wheel 33 and keep parallel to each other.

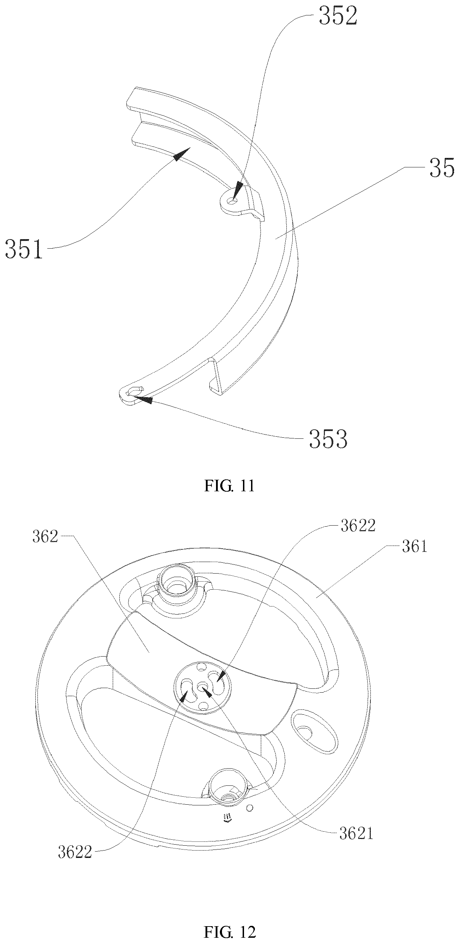

The cooker cover 30 includes a mask 36 and a handle 37. The mask 36 covers the cooker cover outer layer 32. As shown in FIG. 12, the mask 36 is circular. The mask 36 has an annular portion 361 and a crosspiece portion 362, and the crosspiece portion 362 is integrally connected with the center of the annular portion 361, such that the crosspiece portion 362 divides the space inside the annular portion 361 into two semicircular cavities. The crosspiece portion 362 is a downwardly recessed arc, and the crosspiece portion 362 is provided with a second sleeving hole 3621 and two waist-shaped holes 3622. The two waist-shaped holes 3622 are located at both sides of the second sleeving hole 3621, respectively.

The handle 37 is embedded at the mask 36. Specifically, the handle 37 is embedded at the crosspiece portion 362 of the mask 36, and the handle 37 is provided with a third sleeving hole 371 and two fixing holes 372. The third sleeving hole 371 is located at the centre of the handle 37, and two fixing holes 372 are located at both sides of the third sleeving hole 371, respectively. The fixing screw 321 of the cooker cover outer layer 32 passes through the second sleeving hole 3621 of the mask 36 and the third sleeving hole 371 of the handle in turn, respectively. In other words, the mask 36 and the handle 37 are corresponding sleeved at the fixing screw 321 through the second sleeving hole 3621 and the third sleeving hole 371, respectively. Therefore, the mask 36 and the handle 37 are fixed at the cooker cover outer layer 32 in turn, the shifting fork wheel 33, two connecting plates 34 and two clamps 35 are located between the cooker cover outer layer 32 and the mask 36.

When the handle 37 is rotated, the handle 37 drives the shifting fork wheel 33 to rotate, that is, the shifting fork wheel 33 is rotated with the fixing screw 321 as an axis. The shifting fork wheel 33 drives the two connecting plates 34 to swing in opposite directions. The two connecting plates 34 push the two clamps 35 to rotate in opposite directions along the edges of the cook cover 30 and the cooker body 10 with the pin roll 323 as the axis, respectively, that is, the shifting fork wheel 33 drives the two clamps 35 to swing through the connecting plates 34. In this way, the cooker cover 30 can be opened or closed through the clamps 35.

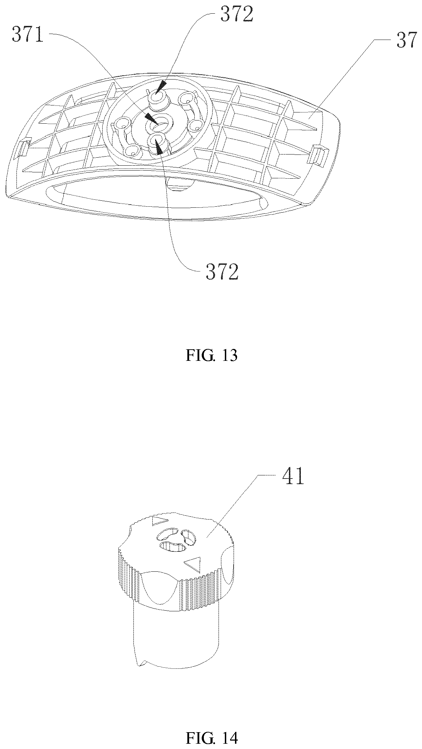

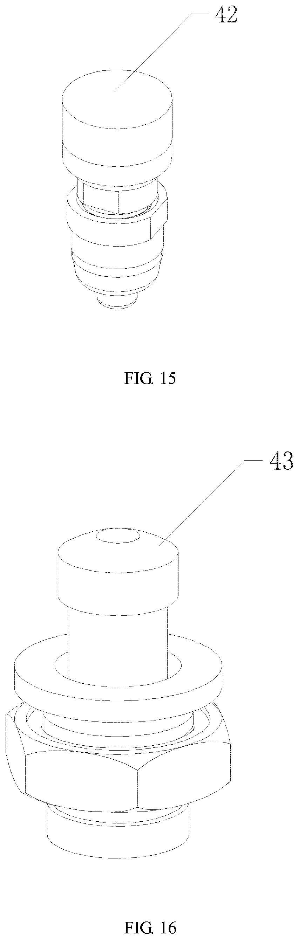

As shown in FIG. 2, FIG. 14 to FIG. 16, the vacuum energy-saving heat-preservation pressure cooker further includes a pressure limiting valve 41, a display valve 42 and a safety valve 43. The pressure limiting valve 41, the display valve 42 and the safety valve 43 are all disposed at the cooker cover 30. An exhaust pipe 411 is disposed in the pressure limiting valve 41 for exhausting gas. The safety valve 43 can be lifted up and down through the limiting hole 342 of the connecting plate 34.

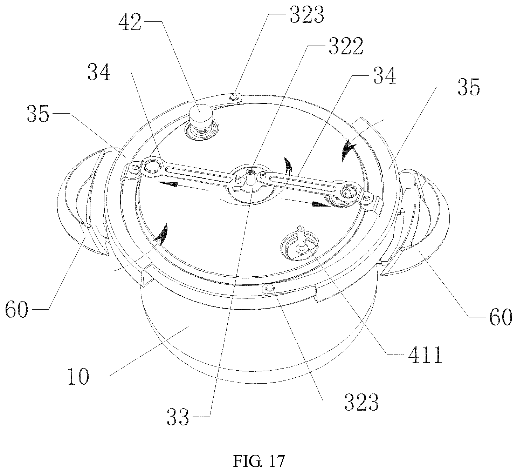

As shown in FIG. 17, when the handle 37 is rotated to drive the shifting fork wheel 33 to be rotated counterclockwise, as shown by arrows in FIG. 17, the shifting fork wheel 33 is rotated with the fixing screw 321 as the axis and drives the two connecting plates 34 to swing in two opposite directions. The connecting plates 34 push the two clamps 35 to rotate in opposite directions along the edges of the cook cover 30 and the cooker body 10, respectively, as shown by arrows in FIG. 17, such that the cook cover 30 of the vacuum energy-saving heat-preservation pressure cooker can be opened. In this state, the handle 37 is rotated to a position not coinciding with the mask 36, that is, the handle 37 and the mask 36 are in a misaligned state. The limiting hole 342 of the connecting plate 34 and the safety valve 43 disposed at the cooker cover 30 are in a misaligned state, such that the connecting plate 34 prevents the safety valve 43 from rising, and the safety valve 43 is open at this time.

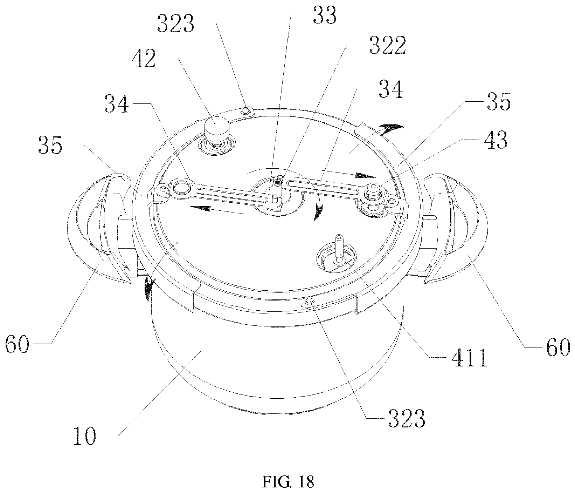

On the contrary, as shown in FIG. 18, when the handle 37 is rotated to drive the shifting fork wheel 33 to be rotated clockwise, as shown by the arrows in FIG. 18, the shifting fork wheel 33 is rotated with the fixing screw 321 as the axis and drives the connecting plates 34 to swing, and the two connecting plates 34 push the two clamps 35 to be rotated in opposite directions along the edges of cook cover 30 and cooker body 20, respectively, as shown by the arrows in FIG. 18. When the handle 37 is rotated to a position completely coincident with the mask 36, the limiting hole 342 of the connecting plates 34 coincides with the position of the safety valve 43 disposed at the cooker cover 30, and the safety valve 43 passes through the limiting hole 342 and rises. When the safety valve 43 automatically rises to the highest point under the internal pressure of the vacuum energy-saving insulation pressure cooker, the safety valve 43 is closed. At the same time, the connecting plates 34 push the clamps 35 to be rotated along the edges of the cooker body 10 and the cooker cover 30 so as to firmly clamp the cooker cover 30 and the cooker body 10 to close the cooker cover 30 of the vacuum energy-saving heat-preservation pressure cooker. The vacuum energy-saving heat-preservation pressure cooker is internally closed and starts working.

When the vacuum energy-saving heat-preservation pressure cooker achieves a certain pressure, the pressure limiting valve 41 starts exhausting through the exhaust pipe 411. The display valve 42 also gradually increases as the pressure in the vacuum energy-saving heat-preservation pressure cooker increases until the working pressure in the vacuum energy-saving heat-preservation pressure cooker reaches a maximum, and an operator is prompted to turn down the fire.

Further, the vacuum energy-saving heat-preservation pressure cooker further includes a gasket 50. The gasket 50 is circular, and the gasket 50 is sealed between the cook cover 30 and the cooker body 10 to ensure sealing of the vacuum energy-saving heat-preservation pressure cooker and improve heat-preservation performance.

The vacuum energy-saving heat-preservation pressure cooker further includes two hand shanks 60, and the two hand shanks 60 are disposed at both sides of the cooker body 10, respectively. When a user holds the hand shanks 60 with both hands, the vacuum energy-saving heat-preservation pressure cooker can be conveniently taken and placed, particularly when the vacuum energy-saving heat-preservation pressure cooker is heated, or when the temperature of the cooker body 10 is high, and the user can be avoided to be scalded.

## Claims

1. A vacuum energy-saving heat-preservation pressure cooker comprising:
a cooker body (10) comprising a cooker body inner layer (1) and a cooker body outer layer (12), wherein the cooker body inner layer has a side wall (111) and a bottom wall (112), a containing cavity (1101) is formed between the side wall and the bottom wall of the cooker body inner layer, the cooker body inner layer is embedded at an inner side of the cooker body outer layer, the cooker body outer layer is in sealed combination with the side wall of the cooker body inner layer, a first vacuum cavity (101) is formed between the cooker body inner layer and the cooker body outer layer, and the first vacuum cavity is evacuated to be in a vacuum state;
a cooker bottom (20) comprising an aluminum layer (21) and a stainless iron layer (22), wherein the bottom wall of the cooker body inner layer, the aluminum layer, and the stainless iron layer are pressure-welded and closely contacted together; and
a cooker cover (30) covering the cooker body, wherein the cooker cover comprises a cooker cover inner layer (31) and a cooker cover outer layer (32), the cooker cover inner layer is embedded at an inner side of the cooker cover outer layer, the cooker cover inner layer is in sealed combination with the cooker cover outer layer, a second vacuum cavity (301) is formed between the cooker cover inner layer and the cooker cover outer layer, and the second vacuum cavity is evacuated to be in a vacuum state,
wherein the cooker cover (30) comprises a shifting fork wheel (33), two connecting plates (34) and two clamps (35), a centre of the cooker cover outer layer has a centre hole (321), the cooker cover outer layer is provided with a fixing screw (322), the fixing screw is fixed at the centre of the cooker cover outer layer through the centre hole, the shifting fork wheel has a first sleeving hole (331) and two fixing columns (332), the two fixing columns are located at two sides of the first sleeving hole, respectively, the shifting fork wheel (33) is sleeved at the fixing screw through the first sleeving hole, one end of each of the two connecting plates is sleeved at one of the two fixing columns, each of the clamps has an arc-shaped groove (351) at one side, the two clamps are respectively connected with the other ends of the two connecting plates, and one end of each of the two clamps is fixed at one of edges of opposite sides of the cooker cover outer layer, and the clamps clamp an edge of the cooker cover and an edge of the cooker body through the grooves (351).

2. A vacuum energy-saving heat-preservation pressure cooker according to claim 1, wherein the bottom wall of the cooker body inner layer is exposed outside the cooker body outer layer, and the cooker body outer layer and the cooker body inner layer are laser welded together.

3. A vacuum energy-saving heat-preservation pressure cooker according to claim 1 or claim 2, wherein both the cooker cover inner layer and the cooker cover outer layer are formed by stretching stainless steel, and the cooker cover inner layer and the cooker cover outer layer are sealed and combined together through laser welding.

4. A vacuum energy-saving heat-preservation pressure cooker according to any one of the preceding claims, wherein both the cooker body inner layer and the cooker body outer layer are made of stainless steel, a thickness range of the cooker body inner layer is 0.8 -1.5 mm, and a thickness range of the cooker body outer layer is 0.5-1.0 mm.

5. A vacuum energy-saving heat-preservation pressure cooker according to any one of the preceding claims, wherein a thickness range of the cooker cover inner layer is 0.8-1.5 mm, and a thickness range of the cooker cover outer layer is 0.5-1.0 mm.

6. A vacuum energy-saving heat-preservation pressure cooker according to any one of the preceding claims, wherein the cooker cover comprises a mask and a handle, the mask covers the cooker cover outer layer, the handle is embedded at the mask, the mask is provided with a second sleeving hole and two waist-shaped holes, the two waist-shaped holes are located at two sides of the second sleeving hole, respectively, the handle is provided with a third sleeving hole and two fixing holes, the two fixing holes are located at two sides of the third sleeving hole, respectively, the fixing screw of the cooker cover outer layer passes through the second sleeving hole of the mask and the third sleeving hole of the handle in turn, and the two fixing columns of the shifting fork wheel correspondingly pass through the two waist-shaped holes of the mask and the two fixing holes of the handle in turn, respectively, and when the handle is rotated, the handle drives the shifting fork wheel to rotate, and the shifting fork wheel drives the two clamps to swing through the connecting plates.

7. A vacuum energy-saving heat-preservation pressure cooker according to any one of the preceding claims, wherein the cooker cover comprises a pressure limiting valve, a display valve, and a safety valve, the pressure limiting valve, the display valve, and the safety valve are all disposed at the cooker cover, an exhaust pipe is disposed in the pressure limiting valve for exhausting gas, one end of the connecting plate has a limiting hole, and the safety valve is capable of being lifted up and down through the limiting hole of the connecting plate; when the limiting hole of the connecting plate and the safety valve are in a misaligned state, the connecting plate prevents the safety valve from rising, and the safety valve is open; and when the limiting hole of the connecting plate coincides with a position of the safety valve, the safety valve passes through the limiting hole and rises, and the safety valve is closed.

## Patentansprüche

1. Energiesparender hitzekonservierender Vakuumkochtopf, umfassend:
einen Kochtopfkörper (10), der eine Kochtopfkörper-Innenschicht (1) und eine Kochtopfkörper-Außenschicht (12) umfasst, wobei die Kochtopfkörper-Innenschicht eine Seitenwand (111) und eine Bodenwand (112) aufweist, wobei ein Aufnahmehohlraum (1101) zwischen der Seitenwand und der Bodenwand der Kochtopfkörper-Innenschicht ausgebildet ist, die Kochtopfkörper-Innenschicht an einer Innenseite der Kochtopfkörper-Außenschicht eingebettet ist, die Kochtopfkörper-Außenschicht in abgedichteter Kombination mit der Seitenwand der Kochtopfkörper-Innenschicht vorliegt, ein erster Vakuumhohlraum (101) zwischen der Kochtopfkörper-Innenschicht und der Kochtopfkörper-Außenschicht ausgebildet ist, und der erste Vakuumhohlraum evakuiert wird, um sich in einem Vakuumzustand zu befinden;
einen Kochtopfboden (20), der eine Aluminiumschicht (21) und eine Schicht (22) aus rostfreiem Eisen umfasst, wobei die Bodenwand der Kochtopfkörper-Innenschicht, die Aluminiumschicht und die Schicht aus rostfreiem Eisen druckgeschweißt und eng miteinander verbunden sind; und
einen Kochtopfdeckel (30), der den Kochtopfkörper abdeckt, wobei der Kochtopfdeckel eine Kochtopfdeckel-Innenschicht (31) und eine Kochtopfdeckel-Außenschicht (32) umfasst, wobei die Kochtopfdeckel-Innenschicht an einer Innenseite der Kochtopfdeckel-Außenschicht eingebettet ist, die Kochtopfdeckel-Innenschicht in abgedichteter Kombination mit der Kochtopfdeckel-Außenschicht vorliegt, ein zweiter Vakuumhohlraum (301) zwischen der Kochtopfdeckel-Innenschicht und der Kochtopfdeckel-Außenschicht ausgebildet ist, und der zweite Vakuumhohlraum evakuiert wird, um sich in einem Vakuumzustand zu befinden,
wobei der Kochtopfdeckel (30) eine Schaltgabelrad (33), zwei Verbindungsplatten (34) und zwei Klammern (35) umfasst, eine Mitte der Kochtopfdeckel-Außenschicht eine Mittelbohrung (321) aufweist, die Kochtopfdeckel-Außenschicht mit einer Befestigungsschraube (322) versehen ist, die Befestigungsschraube in der Mitte der Kochtopfdeckel-Außenschicht durch die Mittelbohrung befestigt ist, das Schaltgabelrad eine erste Hülsenbohrung (331) und zwei Befestigungssäulen (332) aufweist, die beiden Befestigungssäulen sich jeweils an zwei Seiten der ersten Hülsenbohrung befinden, das Schaltgabelrad (33) an der Befestigungsschraube durch die erste Hülsenbohrung mit einer Hülse versehen ist, jeweils ein Ende der beiden Verbindungsplatten an einer der beiden Befestigungssäulen mit einer Hülse versehen ist,
jede der Klammern weist an einer Seite eine bogenförmige Nut (351) auf, die beiden Klammern sind jeweils mit den anderen Enden der beiden Verbindungsplatten verbunden, und ein Ende jeder der beiden Klammern ist an einer der gegenüberliegenden Kanten der Kochtopfdeckel-Außenschicht befestigt, und die Klammern klammern eine Kante des Kochtopfdeckels und eine Kante des Kochtopfkörpers durch die Nuten (351).

2. Energiesparender hitzekonservierender Vakuumkochtopf nach Anspruch 1, wobei die Bodenwand der Kochtopfkörper-Innenschicht außerhalb der Kochtopfkörper-Außenschicht freiliegt, und die Kochtopfkörper-Außenschicht und die Kochtopfkörper-Innenschicht lasergeschweißt sind.

3. Energiesparender hitzekonservierender Vakuumkochtopf nach Anspruch 1 oder Anspruch 2, wobei sowohl die Kochtopfdeckel-Innenschicht als auch die Kochtopfdeckel-Außenschicht durch Richten von rostfreiem Stahl ausgebildet sind, und die Kochtopfdeckel-Innenschicht und die Kochtopfdeckel-Außenschicht durch Laserschweißen abgedichtet und miteinander kombiniert werden.

4. Energiesparender hitzekonservierender Vakuumkochtopf nach einem der vorhergehenden Ansprüche, wobei sowohl die Kochtopfkörper-Innenschicht als auch die Kochtopfkörper-Außenschicht aus rostfreiem Stahl bestehen, ein Dickenbereich der Kochtopfkörper-Innenschicht 0,8 - 1,5 mm beträgt und ein Dickenbereich der Kochtopfkörper-Außenschicht 0,5 - 1,0 mm beträgt.

5. Energiesparender hitzekonservierender Vakuumkochtopf nach einem der vorhergehenden Ansprüche, wobei ein Dickenbereich der Kochtopfdeckel-Innenschicht 0,8 - 1,5 mm beträgt und ein Dickenbereich der Kochtopfdeckel-Außenschicht 0,5 - 1,0 mm beträgt.

6. Energiesparender hitzekonservierender Vakuumkochtopf nach einem der vorhergehenden Ansprüche, wobei der Kochtopfdeckel eine Maske und einen Griff umfasst, wobei die Maske die Kochtopfdeckel-Außenschicht abdeckt, der Griff in die Maske eingebettet ist, die Maske mit einer zweiten Hülsenbohrung und zwei taillenförmigen Bohrungen versehen ist, die beiden taillenförmigen Löcher sich jeweils an zwei Seiten der zweiten Hülsenbohrung befinden, der Griff mit einer dritten Hülsenbohrung und zwei Befestigungsbohrungen versehen ist, die beiden Befestigungsbohrungen sich jeweils an zwei Seiten der dritten Hülsenbohrung befinden, die Befestigungsschraube der Kochtopfdeckel-Außenschicht nacheinander durch die zweite Hülsenbohrung der Maske und die dritte Hülsenbohrung des Griffs hindurchgeführt ist und die beiden Befestigungssäulen des Schaltgabelrads jeweils entsprechend nacheinander durch die beiden taillenförmigen Bohrungen der Maske und die beiden Befestigungsbohrungen des Griffs hindurchgeführt sind, und wenn der Griff gedreht wird, der Griff das Schaltgabelrad antreibt, sich zu drehen, und das Schaltgabelrad die beiden Klammern antreibt, durch die Verbindungsplatten zu schwingen.

7. Energiesparender hitzekonservierender Vakuumkochtopf nach einem der vorhergehenden Ansprüche, wobei der Kochtopfdeckel ein Druckbegrenzungsventil, ein Anzeigeventil und ein Sicherheitsventil umfasst, wobei das Druckbegrenzungsventil, das Anzeigeventil und das Sicherheitsventil alle an dem Kochtopfdeckel angeordnet sind, ein Ablassrohr in dem Druckbegrenzungsventil zum Ablassen von Gas angeordnet ist, ein Ende der Verbindungsplatte eine Begrenzungsbohrung aufweist und das Sicherheitsventil durch die Begrenzungsbohrung der Verbindungsplatte angehoben und abgesenkt werden kann; wenn sich die Begrenzungsbohrung der Verbindungsplatte und das Sicherheitsventil in einem falsch ausgerichteten Zustand befinden, die Verbindungsplatte das Sicherheitsventil am Ansteigen hindert und das Sicherheitsventil offen ist; und wenn die Begrenzungsbohrung der Verbindungsplatte mit einer Position des Sicherheitsventils zusammenfällt, das Sicherheitsventil durch die Begrenzungsbohrung hindurchgeführt wird und ansteigt, und das Sicherheitsventil geschlossen ist.

## Revendications

1. Autocuiseur sous vide à conservation de chaleur et à économie d'énergie, comprenant :
un corps de cuiseur (10) comprenant une couche interne du corps de cuiseur (1) et une couche externe du corps de cuiseur (12), dans lequel la couche interne du corps de cuiseur a une paroi latérale (111) et une paroi inférieure (112), une cavité contenant (1101) est formée entre la paroi latérale et la paroi inférieure de la couche interne du corps de cuiseur, la couche interne du corps de cuiseur est incorporée au niveau d'un côté interne de la couche externe du corps de cuiseur, la couche externe du corps de cuiseur est en combinaison étanche avec la paroi latérale de la couche interne du corps de cuiseur, une première cavité à vide (101) est formée entre la couche interne du corps de cuiseur et la couche externe du corps de cuiseur, et la première cavité à vide est évacuée pour être dans un état de vide ;
un fond de cuiseur (20) comprenant une couche d'aluminium (21) et une couche de fer inoxydable (22), dans lequel la paroi inférieure de la couche interne du corps de cuiseur, la couche d'aluminium et la couche de fer inoxydable sont soudées par pression et en contact étroit ensemble ; et
un couvercle de cuiseur (30) recouvrant le corps de cuiseur, dans lequel le couvercle de cuiseur comprend une couche interne du couvercle de cuiseur (31) et une couche externe du couvercle de cuiseur (32), la couche interne du couvercle de cuiseur est incorporée sur un côté interne de la couche externe du couvercle de cuiseur, la couche interne du couvercle de cuiseur est en combinaison étanche avec la couche externe du couvercle de cuiseur, une deuxième cavité à vide (301) est formée entre la couche interne du couvercle de cuiseur et la couche externe du couvercle de cuiseur, et la seconde cavité à vide est évacuée pour être dans un état de vide,
dans lequel le couvercle de cuiseur (30) comprend une roue de fourchette de sélection (33), deux plaques de raccordement (34) et deux colliers (35), un centre de la couche externe du couvercle de cuiseur a un trou central (321), la couche externe du couvercle de cuiseur est munie d'une vis de fixation (322), la vis de fixation est fixée au centre de la couche externe du couvercle de cuiseur à travers le trou central, la roue de fourchette de sélection a un premier trou de manchon (331) et deux colonnes de fixation (332), les deux colonnes de fixation sont situées sur deux côtés du premier trou de manchon, respectivement, la roue de fourchette de sélection (33) est gainée au niveau de la vis de fixation à travers le premier trou de manchon, une extrémité de chacune des deux plaques de raccordement est gainée à l'une des deux colonnes de fixation, chacun des colliers a une rainure en forme d'arc (351) sur un côté, les deux colliers sont respectivement reliés aux autres extrémités des deux plaques de raccordement, et une extrémité de chacun des deux colliers est fixée à un des bords des côtés opposés de la couche externe du couvercle de cuiseur, et les colliers serrent un bord du couvercle de cuiseur et un bord du corps de cuiseur à travers les rainures (351).

2. Autocuiseur sous vide à conservation de chaleur et à économie d'énergie selon la revendication 1, dans lequel la paroi inférieure de la couche interne du corps de cuiseur est exposée à l'extérieur de la couche externe du corps de cuiseur, et la couche externe du corps de cuiseur et la couche interne du corps de cuiseur sont soudées ensemble au laser.

3. Autocuiseur sous vide à conservation de chaleur et à économie d'énergie selon la revendication 1 ou la revendication 2, dans lequel à la fois la couche interne du couvercle de cuiseur et la couche externe du couvercle de cuiseur sont formées en étirant de l'acier inoxydable, et la couche interne du couvercle de cuiseur et la couche externe du couvercle de cuiseur sont scellées et combinées ensemble par soudage au laser.

4. Autocuiseur sous vide à conservation de chaleur et à économie d'énergie selon l'une quelconque des revendications précédentes, dans lequel à la fois la couche interne du corps de cuiseur et la couche externe du corps de cuiseur sont en acier inoxydable, une plage d'épaisseur de la couche interne du corps de cuiseur va de 0,8 à 1,5 mm et une plage d'épaisseur de la couche externe du corps de cuiseur va de 0,5 à 1,0 mm.

5. Autocuiseur sous vide à conservation de chaleur et à économie d'énergie selon l'une quelconque des revendications précédentes, dans lequel une plage d'épaisseur de la couche interne du couvercle de cuiseur va de 0,8 à 1,5 mm et une plage d'épaisseur de la couche externe du couvercle de cuiseur va de 0,5 à 1,0 mm.

6. Autocuiseur sous vide à conservation de chaleur et à économie d'énergie selon l'une quelconque des revendications précédentes, dans lequel le couvercle de cuiseur comprend un cache et une poignée, le cache recouvre la couche externe du couvercle de cuiseur, la poignée est intégrée au cache, le cache est muni d'un deuxième trou de manchon et de deux trous en forme de taille, les deux trous en forme de taille sont situés sur les deux côtés du deuxième trou de manchon, respectivement, la poignée est pourvue d'un troisième trou de manchon et de deux trous de fixation, les deux trous de fixation sont situés sur les deux côtés du troisième trou de manchon, respectivement, la vis de fixation de la couche externe du couvercle de cuiseur passe à travers le deuxième trou de manchon du cache et le troisième trou de manchon de la poignée à son tour, et les deux colonnes de fixation de la roue de fourchette de sélection passent de façon correspondante à travers les deux trous en forme de taille du cache et les deux trous de fixation de la poignée à leur tour, respectivement, et lorsque la poignée est pivotée, la poignée entraîne la rotation de la roue de la fourchette de sélection, et la roue de la fourchette de sélection entraîne l'oscillation des deux colliers à travers les plaques de raccordement.

7. Autocuiseur sous vide à conservation de chaleur et à économie d'énergie selon l'une quelconque des revendications précédentes, dans lequel le couvercle de cuiseur comprend une soupape de limitation de pression, une soupape d'affichage et une soupape de sécurité, la soupape de limitation de pression, la soupape d'affichage et la soupape de sécurité sont toutes disposées sur le couvercle de cuiseur, un tuyau d'évacuation est disposé dans la soupape de limitation de pression pour évacuer les gaz, une extrémité de la plaque de raccordement a un trou de limitation, et la soupape de sécurité peut être soulevée vers le haut et vers le bas à travers le trou de limitation de la plaque de raccordement; lorsque le trou de limitation de la plaque de raccordement et de la soupape de sécurité sont dans un état désaligné, la plaque de raccordement empêche la soupape de sécurité de monter et la soupape de sécurité est ouverte ; et lorsque le trou de limitation de la plaque de raccordement coïncide avec une position de la soupape de sécurité, la soupape de sécurité traverse le trou de limitation et monte, et la soupape de sécurité est fermée.
